Europäisches Patentamt

European Patent Office

Office européen des brevets

(19)

(11) Veröffentlichungsnummer : **0 424 564 B1**

(12) # EUROPÄISCHE PATENTSCHRIFT

(45) Veröffentlichungstag der Patentschrift :
**29.07.92 Patentblatt 92/31**

(51) Int. Cl.$^5$ : **B01J 2/00,** A01C 1/06

(21) Anmeldenummer : **89119813.7**

(22) Anmeldetag : **25.10.89**

(54) **Prozess zur Verkapselung von Feststoffen wie Samenkörnern oder Wirkstoffen sowie die dabei erhaltenen Granulate.**

(43) Veröffentlichungstag der Anmeldung :
**02.05.91 Patentblatt 91/18**

(45) Bekanntmachung des Hinweises auf die
Patenterteilung :
**29.07.92 Patentblatt 92/31**

(84) Benannte Vertragsstaaten :
**CH DE ES FR GB IT LI NL**

(56) Entgegenhaltungen :
**BE-A- 504 155**
**CH-A- 552 343**
**CH-A- 625 101**
**FR-A- 1 126 851**
**US-A- 4 381 194**
**US-A- 4 624 694**

(72) Erfinder : **Delmas, Michel Prof.**
**6 allée des Amazones**
**F-31320 Auzeville-Tolosane (FR)**
Erfinder : **Gaset, Antoine Prof.**
**75, allée de Brienne**
**F-3100 Toulouse (FR)**
Erfinder : **Savary, Olivier Dipl. Chem.**
**8, Grand-rue Saint Michel Bat.B - Esc. 1**
**F-31400 Toulouse (FR)**
Erfinder : **Thiel, Reinhardt Dr.**
**Thomas-Scharz-Strasse 4**
**W-8060 Dachau (DE)**
Erfinder : **Borredon, Marie-Elizabeth, Dr.**
**6 Impasse de la Menthe**
**F-31170 Tournefeuille (FR)**

(74) Vertreter : **Dahlmann, Gerhard, Dipl.-Ing.**
**c/o Organocell Gesellschaft für Zellstoff- und**
**Umwelttechnik mbH Postfach 60 05 63**
**Planegger Strasse 38**
**W-8000 München 60 (DE)**

(73) Patentinhaber : **Organocell Gesellschaft für**
**Zellstoff- und Umwelttechnik mbH**
**Planegger Strasse 38**
**W-8000 München 60 (DE)**

EP 0 424 564 B1

Jouve, 18, rue Saint-Denis, 75001 PARIS

## Beschreibung

Die Erfindung betrifft ein Verfahren zur Verkapselung von Feststoffen wie Samenkörnern, Pflanzenschutzmitteln, Pharmazeutika, Tierheilmitteln, oder Nahrungsmitteln,bei denen Granulate erhalten werden, in denen der Feststoff mit einer anhaftenden Schicht bedeckt ist. In mehreren Bereichen ist man daran interessiert, den Feststoff einzukapseln, um

* ihn zu schützen (Schutz des Saatgutes im landwirtschaftlichen oder gartenbaulichen Bereich),
* die Granulate zu einer optimierten Verwendung zu kalibrieren (Präzisionssaatgut im landwirtschaftlichen Bereich),
* eine Ergänzung der Aktivität des eingehüllten Feststoffes zu geben (eine umhüllende Schicht von Pestizid oder Wachstumsregler auf dem Saatgut),
* die Aktivität des Feststoffes zeitlich zu regulieren (Erzeugung von auf oralem Weg einnehmbaren Granulaten im tiermedizinischen oder pharmazeutischen Bereich oder als Nahrungsmittel).

Im landwirtschaftlichen Bereich wird die Einkapselung von Samenkörnern normalerweise mit Hilfe von synthetischen Polymeren (insbesondere thermisch durchhärtbaren) realisiert, denen grenzflächenaktive Stoffe zugegeben werden (US-Patente 2.651.883, 3.598.565, 3.813.236, 3.617.247, 3.674.458, 4.381.184 ).

Die wesentlichen Schwächen dieser Verkapselung liegen in ihrer fehlenden biologischen Abbaubarkeit, ihrer geringen Hydrophilität, die das Aufkeimen der Samen erschwert und in ihrer geringen Durchlässigkeit für Sauerstoff, die sich der Atmung der Samenkörner widersetzt und damit ihre Lebensdauer verringert. Außerdem ist für den landwirtschaftlichen Bereich vorgeschlagen worden, die Samenkörner abzuhärten mit Hilfe einer wässrigen Lösung von alkalischem Lignin, das mit grenzflächenaktiven Stoffen versetzt ist (US-Patent 4.624.694). Jedoch ergibt eine solche Verkapselung keine ausreichende physische Textur, die ihm eine gute Haltbarkeit verleihen würde und ergibt außerdem eine leicht abreibbare Beschichtung. Die Granulate zerfallen sehr schnell durch gegenseitige Reibung, so daß eine solche Verkapselung unvereinbar ist mit längeren Lagerdauern (mehr als 5 bis 6 Tage) oder mit einer Verwendung in bestimmten Maschinen, und zwar insbesondere in Präzisionssaatmaschinen (aufgrund der Verklumpungseffekte).

Im pharmazeutischen oder tiermedizinischen Bereich ist seit langem bekannt, wie man Granulate herstellen kann, die auf oralem Wege einnehmbar sind und die eine aktive Substanz in einer Gelatinekapsel einschließen, die es auf geeignete Weise ermöglicht, die Aktivität der Substanz zu regeln. Aber es handelt sich dabei nicht um eine Technik zur Verkapselung, sondern um Tablettiertechniken, die sehr viel kostenaufwendiger sind und deshalb auf den pharmazeutischen und tiermedizinischen Bereich beschränkt bleiben. Außerdem kann man natürlich Granulate vom Typ Dragee oder Bonbon erzeugen, bei denen die äußere Schicht aus gehärtetem Zucker besteht, wobei die Technik der Herstellung jedoch für den Anwendungszweck spezifisch ist.

Die vorliegende Erfindung schlägt einen neuen Prozeß zur Verkapselung von Feststoffen vor, der die folgenden Eigenschaften kombiniert:

* Gute mechanische Beständigkeit der äußeren Schicht auf Feststoff,
* gute Durchlässigkeit für Wasser und Gase (Sauerstoff),
* biologische Abbaubarkeit der Hemicellulosen,
* das völlige Fehlen von toxischer Wirkung auf Mensch, Tier und Pflanze sowie
* ein biologischer Regelungseffekt.

Die Erfindung zielt auf einen Prozeß ab, der sowohl im landwirtschaftlichen Bereich verwendbar ist, um dort die Nachteile der bekannten Verkapselungstechniken zu mindern, als auch im tiermedizinischen und pharmazeutischen Bereich und im Nahrungsmittelbereich, um dort bestehende Techniken zu ersetzen, insbesondere teure Tablettiertechniken.

Zu diesem Zweck schließt der erfindungsgemäße Prozeß zur Verkapselung von Feststoffen,bei dem Granulate erhalten werden, die aus mindestens einem Kern und einer anhaftenden Schicht bestehen, folgende Schritte ein:

a) Ein flüssiges Verkapselungsprodukt durch Ansäuern einer Mischung von Hemicellulosen und Ligninen zu erzeugen, das aus faserigen Pflanzen stammt.

b) Den Kontakt zwischen dem flüssigen Verkapselungsprodukt und dem zu verkapselnden Feststoff herzustellen, um dadurch eine gute Verbindung dieser Elemente zu erzeugen.

c) Ein trockenes Pulver zuzugeben zu den so verbundenen Elementen, um eine oberflächliche Trocknung zu erzielen und damit die gewünschten Granulate zu erhalten.

Die Versuche haben gezeigt, daß Hemicellulose und Lignin in saurem Medium gut zusammenwirken und zu einem flüssigen Verkapselungsprodukt führen, das exzellente Klebeeigenschaften aufweist. Beim Kontakt mit dem Feststoff bildet sich eine Schicht, die sich auf dem Feststoff verteilt und durch Trocknung aushärtet. Es scheint, daß diese Aushärtung herrührt von einer Copolymerisation durch saure Katalyse zwischen den Hemicellulosen und den Ligninen. Dieses Phänomen wird beschleunigt durch Zugabe des Trockenpulvers, das es außerdem erlaubt, die Granulate zu vereinzeln, indem jegliche Aggregatbildung vermieden wird. Man erhält so Granulate mit ausgezeichneter mechanischer Beständigkeit, vergleichbar mit der, die man durch klassische Techniken erzeugt, bei denen synthetische, polymere Bindemittel verwendet werden. Diese Granulate können während sehr langer Zeiten ohne Gefahr des Abriebs gelagert werden und in Maschinen verwendet werden, ohne zu Verklumpungsproblemen zu führen. Weiterhin weist die Kapselschicht einen mikroporösen Charakter auf und hydrophile Eigenschaften, die vereint eine gute Durchlässigkeit für Wasser und Sauerstoff ergeben. Diese Schicht ist biologisch abbaubar und nicht toxisch aufgrund der Natur der Produkte, aus denen sie besteht. Es ist außerdem bemerkenswert, daß die Eigenschaft der Durchlässigkeit der Verkapselung und die Möglichkeit der langsamen Hydrolyse und der Hemicellulosen es erlauben, in bestimmten Anwendungen eine differenzierte Abgabe der im Kern enthaltenen Substanzen zu erzielen, insbesondere die Abgabe der aktiven Substanzen in pharmazeutischen und tiermedizinischen Anwendungsgebieten.

Der erfindungsgemäße Prozeß kann kostengünstig angewendet werden, insbesondere im Vergleich zu Tablettiertechniken, wenn man das Verkapselungsprodukt aus der Hemicellulose herstellt, die bei der wässrigen Extraktion von faserigen Pflanzen anfällt und Lignin enthält. Diese wässrigen Extrakte werden frei bei der Anwendung von Prozessen zur Zellulosegewinnung, entweder durch Vorhydrolyse oder Lösungsmittel oder auch durch überhitzten Wasserdampf. Der erfindungsgemäße Prozeß erlaubt es so, Produkte zu verwerten, die als Unterprodukte in gewissen neuen Prozessen zur Papiererzeugung (Organocell) anfallen und die bisher nur sehr wenig Anwendung gefunden haben. Die zuvor erwähnten wässrigen Extrakte bestehen aus einer Mischung von löslichen Hemicellulosen, löslichem Lignin und Ligninen in Suspension. Das Verhältnis von Hemicellulosen zu Lignin liegt im allgemeinen zwischen 0,3 und 1,2, so daß ein erfolgreicher Betrieb des Prozesses möglich ist.

Darüberhinaus sind die wässrigen Extrakte am Ende der nachgeordneten Prozesse im allgemeinen zu stark verdünnt (0,05 g Trockenmasse/g Produkt) und das erfindungsgemäße Verkapselungsprodukt wird vorzugsweise dadurch hergestellt, daß man den Hemicelluloseanteil sehr wässriger Extrakte aufkonzentriert, bis man einen Gewichtsanteil erhält zwischen 0,4 und 0,8 g Trockenmasse /g flüssiges Verkapselungsprodukt.

Dieser Konzentrationsbereich führt zu einer guten Qualität der Feststoffverkapselung (gute Anhaftung des Produktes und Kontinuität der Schicht).

Die Ansäuerung des Gemisches aus Hemicellulose und Lignin kann bewirkt werden durch Zugabe von Zitronensäure in Gewichtsanteilen zwischen 0,004 und 0,03 g Zitronensäure / g Trockenmasse. Die Zitronensäure ist leichter als die mineralischen Säuren zu handhaben und ist aufgrund ihrer fehlenden Toxizität mit allen Anwendungen vereinbar.

Je nach beabsichtigter Anwendung kann man Hilfsprodukte zu dem Verkapselungsprodukt zugeben, um die Verkapselung noch weiter zu verbessern und/oder seine Durchführung zu erleichtern oder der Verkapselungsschicht bestimmte Eigenschaften zu verleihen: Grenzflächenaktive Stoffe für eine homogene Kapselschicht, Frostschutzmittel, um das Verkapselungsprodukt bei niedrigen Temperaturen lagern zu können, Pestizide, Wachstumsregler usw.

Nach einer bewährten Methode wird die Copolymerisation durch saure Katalyse am besten bei erhöhter Temperatur durchgeführt.

a) Das flüssige Verkapselungsprodukt wird erzeugt durch Erhitzen des sauren Milieus auf Hemicellulosebasis.

b) Die Vermischung des Produktes und des Feststoffes erfolgt bei erhöhter Temperatur.

Die optimale Temperatur liegt zwischen 50 und 80° C, wobei die Viskosität genügend gering ist, so daß eine gute Kapselschicht erhalten wird.

Bei diesem vorteilhaften Prozeß besteht das trockene Pulver, das die Trocknung der Kapselschicht bewirken soll, aus Ligninpulver, das insbesondere durch saure oder elektrolytische Niederschlagung aus Pflanzenextrakten mit hohem Ligningehalt (z. B. Extrakten, die man aus der 2. Extraktionsstufe im Organocell-Prozeß erhält). Dieses nicht toxische Pulver weist eine bemerkenswerte Effektivität bei der Trocknung auf und ist für die Mehrzahl der Anwendungen geeignet. Außerdem formt es auf der Kapselschicht einen pulvrigen Film, der den Granulaten in gewissen Anwendungen interessante Eigenschaften verleiht, insbesondere beim Schutz von Saatgut (aufgrund der verminderten Freßlust, die vom Lignin auf der Oberfläche herrührt).

Vorzugsweise verwendet man Ligninpulver mit feiner Korngröße, dessen Partikelgröße unterhalb 200 μ liegt. Die Pulverkörner werden so am besten und auf gleichmäßigste Weise auf der Kapselschicht fixiert.

Der Prozeß läßt sich insbesondere anwenden, um Samenkörner einzukapseln, wobei die Kapselschicht ein Pestizid zu Pflanzenschutzzwecken oder ein Wachstumsregler zur verbesserten Keimbildung enthalten kann.

Das Pulver des äußeren Filmes kann eventuell angefärbt werden, um so eine verbesserte Wiedererkennbarkeit zu bewirken.

Aufgrund der fehlenden Toxizität der Kapselschicht und ihrer biologisch regelnden Eigenschaften kann der erfindungsgemäße Prozeß angewendet werden, um Granulate zu erzeugen, die auf oralem Wege einzunehmen sind und deren Kern pharmazeutische oder tiermedizinische Substanzen bzw. Nahrungsmittel enthalten kann. Diese Substanzen können entweder aktiv, diätetisch oder anders wirken.

Die Erfindung erstreckt sich auf Granulate, die durch den hier definierten Prozeß erzeugt werden, wobei die Granulate zumindest einen Kern aus Feststoff enthalten, insbesondere ein Samenkorn oder ein Pflanzenschutzmittel, Pharmazeutikum, Tierpharmazeutikum oder Nahrungsmittel und eine anhaftende äußere Schicht, die aus Hemicellulose und verfestigtem Lignin besteht und einem pulvrigen Film, der auf dieser Schicht fixiert ist und hauptsächlich aus Lignin besteht. Die folgende Beschreibung illustriert durch Beispiele die Anwendung des erfindungsgemäßen Prozesses zur Einkapselung von Samenkörnern. Alle diese Beispiele sind nach dem nachfolgend beschriebenen Prozeß durchgeführt worden, die abschließende Tabelle liefert die Werte der gewählten Parameter und faßt die erhaltenen Ergebnisse zusammen.

A) Herstellung des flüssigen Verkapselungsproduktes

Das flüssige Verkapselungsprodukt, das in den Beispielen verwendet wird, ist hergestellt aus dem wässrigen Extrakt von Fichtenholz, wie man ihn im Organocell-Prozeß erhält (Europäisches Patent Nr. 90969). Man erhält am Ende dieses Prozesses eine Hemicellulosefraktion des Extraktes, die auf die Trockenmasse bezogen 20 - 50 % Hemicellulose und 40 - 70 % Lignin enthält.

Diese Hemicellulosefraktion wird im Vakuum (10 mm Hg = 133Pa) aufkonzentriert bei einer Temperatur von 70 ° C, bis man einen Gehalt von (M) Gramm Trockenmasse je 1 g Flüssigkeit erreicht.

Die Flüssigkeit wird anschließend auf (N) s. Tabelle, Seite 11 ° C erhitzt unter magnetischem Rühren. Man gibt dann pro Gramm Trockenmasse (P) s. Tabelle, Seite 11 Gramm Zitronensäure und (0) s. Tabelle, Seite 11 Gramm grenzflächenaktiven Stoff zu, der zum Beispiel aus Fettalkohol-Polyepoxyd besteht. Man gibt außerdem dem Gemisch (R) s. Tabelle, Seite 11 Gramm eines Pestizides pro Gramm Trockenmasse zu, wobei das pflanzenverträgliche Pestizid aus THIRAME besteht.

Das Gemisch wird bei (N) s. Tabelle, Seite 11 ° C Rühren während (S) s. Tabelle, Seite 11 Minuten gehalten. Man erhält so eine homogene bräunliche Flüssigkeit.

B) Einkapseln der Samenkörner

Verschiedene Arten von Samenkörnern sind eingekapselt worden, wie es die abschließende Tabelle verdeutlicht: Erbsen, Weizenkörner, Sonnenblumenkerne, Grassamen, Maiskörner, Rapskörner.

(W) s. Tabelle, Seite 11 Gramm dieser Samenkörner werden in eine diskontinuierliche Schleuder oder ein kontinuierliches Gerät eingetragen, in dem ein Sprühstrahl oder ein zusammenhängender Strahl erzeugt wird.

Die diskontinuierliche Schleuder enthält einen Behälter, in dem sich die Samenkörner befinden, das flüssige Verkapselungsprodukt wird dann bei erhöhter Temperatur zugegeben in diesen Behälter. Der Gewichtsprozentsatz des Verkapselungsproduktes ist dann (Z) s. Tabelle, Seite 11 % in bezug auf das Gewicht der Samenkörner. Das Ganze wird dann mechanisch vermischt, bis das ganze flüssige Verkapselungsprodukt die Samenkörner einhüllt (Dauer des Prozesses variiert zwischen etwa 1 bis 3 Minuten).

Die kontinuierliche Anlage schließt eine Dosierung der Samenkörner, einen Extruder zum Feststoffeintrag und einen Sprühtunnel ein. In diesem Tunnel wird das flüssige Verkapselungsprodukt entweder diskontinuierlich als feinster Tropfen auf die Samenkörner eingetragen (aufsprühen) oder kontinuierlich durch einen Sprühstrahl (Sprühstrahl). Der Durchsatz an Samenkörnern beträgt (W) siehe Tabelle, Seite 11 Gramm pro Minute und der Gewichtsanteil des flüssigen aufgetragenen Verkapselungsproduktes wird auf (Z) siehe Tabelle, Seite 11 % in Bezug auf das Samenkorngewicht eingestellt.

Am Ende der Einwirkung des Produktes sind die Samenkörner von einem feuchten Produkt verkapselt, das getrocknet wird und zwar teilweise in der Anlage selbst, teilweise in der folgenden Prozeßstufe.

C) Trocknung

Man benutzt Ligninpulver, das am Ende des 2. Kochprozesses des erwähnten Organocell-Prozesses erhalten wird. Dieses Pulver weist eine Korngröße < 200 μ auf (in der Größenordnung von 80 μ) und besitzt einen Feuchtegehalt von weniger als 3 Gewichtsprozent.

In manchen Beispielen fügt man diesem Pulver (T) siehe Tabelle, Seite 11 Gewichtsprozent einwa Pestizides(THIRAME) zu, das als gesiebtes Pulver anfällt (Korngröße 100 μ), in anderen Beispielen gibt man (W) siehe Tabelle, Seite 11 Gewichtsprozent von gesiebtem Vermizulit (Korngröße < 100 μ) zu.

Dieses Pulver oder diese Pulvermischung wird auf die umhüllten Körner gegeben, während deren Abkühlung entweder in dem Schleuderbehälter oder einem der kontinuierlichen Anlage nachgeschalteten Eintrag. Die eingetragene Pulvermenge beträgt in der Größenordnung 50 Massenprozent der umhüllten Körner, so daß das Pulver in großem Überschuß vorliegt. Das Ganze wird während einiger Minuten gerührt, entweder in dem Schleuderbehälter oder während des Transportes des Produktes in der kontinuierlichen Anlage.

Anschließend wird das Ganze aus dem Schleuderbehälter oder der kontinuierlichen Anlage ausgetragen und während einer Stunde mit dem Ligninüberschuß an freier Luft gelagert. Dieser Überschuß wird anschließend durch Sieben wiedergewonnen und die umhüllten Körner werden während 48 Stunden in einem ventilierten und trockenen Ort auf einem Gitter angeordnet.

Man erhält am Ausgang des vorstehenden Prozesses zusammengesetzte Granulate, zum einen Teil bestehend aus dem Kern und zum anderen Teil aus der Kapselschicht aus Hemicellulosen und verfestigtem Lignin, die am Kern anhaften, sowie einem pulvrigen Film von Lignin, der auf der Kapselschicht anhaftet. Die verschiedenen Typen der erhaltenen Granulate werden unterschiedlichen Tests unterworfen:

* Messungen bei starker Vergrößerung der mittleren Größe des Kerns D Index N s. Tabelle, Seite 11 (Vergrößerung und Verkleinerung) und des mittleren Durchmessers der Kapselschicht und des Pulverfilmes E Index C, s. Tabelle, Seite 11
* Test des Aussehens,
* Haltbarkeitstests der Verkapselung entsprechend dem nachstehenden Protokoll,
* Test des Aufkeimens entsprechend dem nachstehenden Protokoll,
* Freßtests entsprechend dem nachstehenden Protokoll.

Tabelle 1

| Variablen | | Beispiel 1 | Beispiel 2 | Beispiel 3 | Beispiel 4 | Beispiel 5 | Beispiel 6 |
|---|---|---|---|---|---|---|---|
| M | Gehalt an Trockenmasse | 0,7 | 0,7 | 0,7 | 0,55 | 0,55 | 0,55 |
| N | Heiztemperatur | 80° C | 70° C | 60° C | 80° C | 70° C | 60° C |
| P | Zitronensäure | 1,43 % | 2,86 % | 2,86 % | 5,45 % | 5,45 % | 7,22 % |
| Q | grenzflächenaktive Substanz | 2,86 % | 2,86 % | 0,00 % | 1,82 % | 0,00 % | 0,00 % |
| R | flüssiges Pestizid | 0,00 % | 0,71 % | 0,00 % | 0,00 % | 0,00 % | 0,00 % |
| S | Heizdauer | 20' | 10' | 10' | 30' | 45' | 60' |
| T | pulverförmiges Pestizid | 10 % | 0,50 % | 0 % | 0 % | 0 % | 0 % |
| V | Vermizulit | 0 % | 0 % | 0 % | 0 % | 0 % | 0 % |
| | Typ des Zahlenkorns | Erbse | Weizen | Sonnenblume | Gras | Mais | Raps |
| W | Samenkornmasse | 100 | 100 | 300 g/mn | 500 g/mn | 100 | 100 |
| | Verkapselungssystem | Schleuder | Schleuder | kontinuierl | kontinuierl. | Schleuder | Schleuder |
| | Verteilung der Flüssigkeit | diskontinuierl. | diskontinuierl. | Sprühstrahl | Zerstäubung | diskontinuierl. | diskontinuierl. |
| | Länge der flüssigen Formulierung | 4 % | 6 % | 6 % | 8 % | 7 % | 10 % |
| | Physikalische Tests Durchmesser D Index M | 5mm/5mm | 4mm/2mm | 7mm/4mm | / | 6mm/3mm | 2mm/2mm |
| | Durchmesser der Verkapselung E Index C | 1/10 mm | 1/10 mm | 1/10 mm | / | 1/10 mm | 1/20mm |
| | Aussehen der Verkapselung | dunkelbraun Glizant | dunkelbraun | hellbraun | dunkelbraun | dunkelbraun | dunkelbraun |
| | Haltbarkeit der Verkapselung | 5200 | 6100 | 3000 | / | 8300 | / |
| | physiologische Tests Keimbildung | 94 % | 85 % | / | / | / | 95 % |
| | Freßtest | / | / | 30 % | / | 5 % | / |

Haltbarkeitstests der Verkapselung

50 g Granulat werden in einen birnenförmigen Kolben mit Schikanen in 250 ml Inhalt gegeben.

Der Ballon wird in Rotation versetzt mit einer Geschwindigkeit von 80 Umdrehungen pro Minute.

Die Ablösekinetik der Verkapselung wird verfolgt. Dazu werden das Pulver und die Trümmer der Verkapselung zu verschiedenen Zeiten gewogen, die Zahl der Umdrehungen ergibt sich direkt. Der angegebene Wert entspricht der Zahl der Umdrehungen des Kolbens, die nötig ist, um 50 % der totalen Masse der Granulatverkapselung abzureiben.

Dieser Test ist besonders streng und man kann davon ausgehen, daß oberhalb von 3.000 die Verkapselung eine gute Festigkeit, oberhalb von 6.000 eine exzellente Festigkeit und oberhalb von 8.300 eine bemerkenswerte Festigkeit aufweist.

Keimtests

Eine bestimmte Zahl Granulate (100) wird in Behältern ausgestreut, die einen hydrophil innerten Stoff enthalten (Vermiculit).

Der Wassergehalt des Stoffes entspricht seiner Sättigung mit Wasser. Die Behälter werden während des Aufkeimens in einem geschlossenen Raum gehalten, vor Licht geschützt, aber belüftet. Diese Bedingungen erlauben es, den Faktor der variierenden Lichtintensität und der variierenden Zusammensetzung des Grundstoffes zu eliminieren.

Die verkapselten Granulate werden zur selben Zeit und zu den selben Bedingungen wie die gleiche Menge von Vergleichskörnern, die jedoch nicht verkapselt sind, zum Keimen gebracht.

Die Keimrate wird nach 8 Tagen in Bezug auf die Vergleichskeimung gemessen. Die Keimrate ist gut und weist nur eine geringe Verzögerung auf (was bei allen Arten von Verkapselung so ist). Das Verhältnis von 85 % in bezug auf den Vergleichsmaßstab wird als eine Schwelle der befriedigenden Qualität erachtet.

Freßtest

Granulate, die entsprechend den Beispielen 3 und 5 verkapselt worden sind, werden zwei Vögeln vorgesetzt, einer Taube und einer Turteltaube.

Der Freßtrieb wird auf 2 verschiedene Arten beurteilt.

a) Der nichtverkapselte Vergleichsmaßstab wird alleine in einen Freßnapf gegeben; die verkapselten Körner werden in einem zweiten Freßnapf vorgelegt (gleiches Gewicht).

b) Der nichtverkapselte Vergleichsmaßstab wird mit den verkapselten Körnern vermischt und in beiden Freßnäpfen vorgelegt (gleiches Gewicht)) um die Auswahl der Vögel beurteilen zu können.

Die Körner werden anschließend gewogen und man rechnet den Prozentsatz des Verbrauchs der verkapselten Granulate zum Gesamtverbrauch (verkapselte Körner und normale nicht verkapselte Körner).

Die entsprechend a) und b) erhaltenen Ergebnisse sind in etwa identisch mit einer leichten Zunahme (5 % des Verbrauchs der verkapselten Körner im Falle b). Der Mittelwert der beiden Tests ist in der Tabelle aufgelistet.

Außerdem ist ein Test mit den Granulaten entsprechend Beispiel 2) aber in Abwesenheit des Pestizides durchgeführt worden. Der berechnete Mittelwert beträgt 18 %.

Man kann also eine wirksame Verringerung des Freßtriebes durch die Verkapselung beobachten (Einsparen von etwa 70 % des Verbrauchs).

**Patentansprüche**

1. Verfahren zur Verkapselung von Feststoffen, um Granulate zu erhalten, die mindestens einen Feststoffkern und eine anhaftende Schicht enthalten, dadurch gekennzeichnet, daß man

a) ein flüssiges Verkapselungsprodukt durch Ansäuern einer Mischung aus Hemicellulosen und Lignin aus faserigen Pflanzen herstellt;

b) das Verkapselungsprodukt mit dem zu verkapselnden Produkt in Kontakt bringt, um eine gute Vermengung beider Elemente zu erreichen.

c) ein trockenes Pulver zu den so verbundenen Elementen zugibt, um eine oberflächliche Trocknung zu erreichen und die gewünschten Granulate zu erhalten.

2. Verfahren zur Verkapselung nach Anspruch 1,

dadurch gekennzeichnet, daß in a) das Verkapselungsprodukt hergestellt ist aus der Hemicellulosefraktion von

7

wässrigen Extrakten aus faserigen Pflanzen, wobei diese Fraktion Lignin enthält.

3. Verfahren zur Verkapselung nach Anspruch 2, dadurch gekennzeichnet, daß das Verkapselungsprodukt entsprechend a) hergestellt wird durch Aufkonzentrieren der erwähnten Hemicellulosefraktion der wässrigen Extrakte, um ein Produkt mit Gewichtsanteilen zwischen 0,4 und 0,8 g Trockenmasse pro Gramm flüssiges Verkapselungsprodukt zu erhalten.

4. Verfahren zur Verkapselung nach einem der Ansprüche 1 bis 3, dadurch gekennzeichnet, daß das Verkapselungsprodukt entsprechend a) angesäuert wird mit Hilfe von Zitronensäure in Gewichtsanteilen zwischen 0,004 und 0,03 g Zitronensäure pro Gramm Trockenmasse.

5. Verfahren zur Verkapselung nach einem der Ansprüche 1 bis 4, dadurch gekennzeichnet, daß man im Schritt a) einen grenzflächenaktiven Stoff zum Verkapselungsprodukt zugibt.

6. Verfahren zur Verkapselung nach einem der Ansprüche 1 bis 5, dadurch gekennzeichnet, daß im Schritt a) ein Frostschutzmittel und/oder ein Pestizid zum Verkapselungsprodukt zugegeben wird.

7. Verfahren zur Verkapselung nach einem der vorstehenden Ansprüche dadurch gekennzeichnet, daß

a) das flüssige Verkapselungsprodukt durch Aufwärmen der angesäuerten Hemicellulosen hergestellt wird,

b) der Kontakt von Produkt und Feststoff bei erhöhter Temperatur hergestellt wird.

8. Verfahren zur Verkapselung nach Anspruch 7, dadurch gekennzeichnet, daß im Schritt a) das Verkapselungsprodukt hergestellt wird durch Aufwärmen des angesäuerten misches von Hemicellulosen und Ligninen auf eine Temperatur zwischen 50 und 80 ° C bis zum Erhalt einer homogenen Lösung mit geringer Viskosität.

9. Verfahren zur Verkapselung nach einem der vorstehenden Ansprüche, dadurch gekennzeichnet, daß im Schritt b) das Herstellen des Kontaktes zwischen dem Feststoff und dem Verkapselungsprodukt darin besteht, daß man das besagte Verkapselungsprodukt auf den Feststoff gießt, so daß der Gewichtsanteil des Verkapselungsprodukts in bezug auf den Feststoff zwischen 1 und 10 % liegt und wobei man anschließend vermischt.

10. Verfahren zur Verkapselung nach einem der vorstehenden Ansprüche, dadurch gekennzeichnet, daß man in Schritt c) ein trockenes Pulver zugibt, das im wesentlichen aus Lignin besteht.

11. Verfahren zur Verkapselung nach den Ansprüchen 7 und 10, dadurch gekennzeichnet, daß man im Schritt c) das Ligninpulver auf die vermischten Elemente gibt, während des Abkühlens des letzteren.

12. Verfahren zur Verkapselung nach einem der Ansprüche 10 oder 11, dadurch gekennzeichnet, daß man im Schritt C) das Ligninpulver auf die vermischten Elemente gibt bis zur Vereinzelung der Granulate und dann den Überschuß an Pulver wiedergewinnt.

13. Verfahren zur Verkapselung nach einem der Ansprüche 10 bis 12, dadurch gekennzeichnet, daß man im Schritt C) ein Ligninpulver verwendet, dessen Partikelgröße < 200 $\mu$ ist.

14. Verfahren zur Verkapselung nach einem der Ansprüche 1 bis 13, dadurch gekennzeichnet, daß der Feststoff, der zu verkapseln ist, aus Samenkörnern besteht.

15. Verfahren zur Verkapselung nach Anspruch 14, dadurch gekennzeichnet, daß im Schritt a) das Verkapselungsprodukt mindestens einen der nachfolgenden Zusätze enthält: Pestizid, Wachstumsregler.

16. Verfahren zur Verkapselung nach Anspruch 14, dadurch gekennzeichnet, daß im Schritt c) ein gefärbtes Pulver zu den vermischten Elementen zugegeben wird.

17. Verfahren zur Verkapselung nach einem der Ansprüche 1 bis 13, dadurch gekennzeichnet, daß Granulate erhalten werden, die auf oralem Weg einzunehmen sind und deren Kern pharmazeutische oder tiermedizinische Substanzen oder Nahrungsmittel enthält.

18. Granulate, die mindestens einen Kern aus Feststoff enthalten, insbesondere Samenkorn oder Pflanzenschutzmittel oder Pharmazeutikum, Tierpharmazeutikum oder Nahrungsmittel, deren anhaftende Schicht dadurch gekennzeichnet ist, daß sie aus verfestigten Hemicellulosen und Ligninen besteht und daß ein pulverförmiger Film auf der Oberfläche dieser Verkapselung anhaftet.

19. Granulate nach Anspruch 18, dadurch gekennzeichnet, daß der pulverige Film aus Lignin besteht.

## Revendications

1. Procédé d'enrobage d'éléments solides en vue vue d'obtenir des granules comprenant au moins un noyau formé par un élément solide et une couche périphérique adhérant audit élément solide, caractérisé en ce qu'il consiste:

a) à fabriquer un produit liquide d'enrobage en acidifiant un mélange d'hémicelluloses et de lignines issues de végétaux à fibres,

b) à mettre en contact ledit produit d'enrobage avec les éléments solides à enrober en vue de réaliser une enduction de ces éléments,

c) à verser une poudre sèche sur lesdits éléments ainsi enduits, de facon à réaliser une dessication superficielle des éléments enduits et à obtenir les granules désirés.

2. Procédé d'enrobage selon la revendication 1, caractérisé en ce que (a) le produit d'enrobage est fabriqué à partir de la fraction hémicellulosique de jus agueux d'extraction de plantes à fibres, fraction contenant un pourcentage minoritaire de lignines.

3. Procédé d'enrobage selon la revendication 2, caractérisé en ce que (a) le produit d'enrobage est fabriqué en concentrant ladite fraction hémicellulosique de jus aqueux jusqu'à obtenir un produit de concentration pondérale comprise entre 0,40 et 0,80 g de matière sèche par gramme de produit liquide d'enrobage.

4. Procédé d'enrobage selon l'une des revendications 1, 2 ou 3, dans lequel (a) le produit d'enrobage est acidifié au moyen d'acide citrique en proportion pondérale comprise entre 0,004 et 0,030 g d'acide citrique par gramme de matière sèche.

5. Procédé d'enrobage selon l'une des revendications 1, 2, 3 ou 4, dans lequel (a) l'on ajoute un tensio-actif au produit d'enrobage.

6. Procédé d'enrobage selon l'une des revendications 1, 2, 3, 4 ou 5, dans lequel (a) l'on ajoute au produit d'enrobage un antigel et/ou un pesticide.

7. Procédé d'enrobage selon l'une des revendications précédentes, caractérisé en ce que:

a) le produit liquide d'enrobage est fabriqué en chauffant le milieu acide à base d'hémicelluloses,

b) la mise en contact de ce produit et des éléments solides est réaslisée à chaud.

8. Procédé d'enrobage selon la revedication 7, caractérisé en ce que (a) le produit d'enrobage est fabriqué en chauffant le mélange acide d'hémicelluloses et de lignines à une température comprise entre 50° C et 80° C jusqu'à obtention d'une solution homogène de faible viscosité.

9. Procédé d'enrobage selon l'une des revendications précédentes, dans lequel (b) la mise en contact des éléments solides et du produit d'enrobage consiste à verser ledit produit d'enrobage sur les éléments solides de sorte que le pourcentage pondéral du produit d'enrobage par rapport aux éléments solides soit compris entre 1 % et 10 %, puis à mélanger l'ensemble.

10. Procédé d'enrobage selon l'une des revendications précédentes, caractérisé en ce que (c) l'on verse une poudre sèche essentiellement constituée par de la poudre de lignine.

11. Procédé d'enrobage selon les revendications 7 et 10 prises ensemble, caractérisé en ce que (c) l'on verse la poudre de lignine sur les éléments enduits au cours du refroidissement de ces derniers.

12. Procédé d'enrobage selon l'une des revendications 10 ou 11, caractérisé en ce que (c) l'on verse la poudre de lignine sur les éléments enduits jusqu'à séparation des granules et l'on récupère les excès de poudre.

13. Procédé d'enrobage selon l'une des revendications 10, 11 ou 12, caractérisé en ce que (c) l'on utilise une poudre de lignine dont la dimension des particules est inférieure à 200 $\mu$m.

14. Procédé d'enrobage conforme à l'une des revendications 1 à 13, dans lequel les éléments solides à enrober sont des graines.

15. Procédé d'enrobage selon la revendication 14, dans lequel (a) l'on ajoute au produit d'enrobage au moins un des additifs suivants : pesticide, régulateur de croissance.

16. Procédé d'enrobage selon la revendication 14, dans lequel (c) l'on verse sur les éléments enduits une poudre colorée.

17. Procédé d'enrobage conforme à l'une des revendications 1 à 13 en vue d'obtenir des granules ingérables dont le noyau contient des substances pharmaceutique, vétérinaires ou alimentaires.

18. Granules comprenant au mois un noyau formé par un élément solide, notamment graine ou substance phytosanitaire, pharmaceutique, vétérinaire ou alimentaire, et une couche périphérique adhérant audit élément solide, caractérisé en ce que la couche pérophérique est à base d'hémicelluloses et de lignines solidifiées et en ce qu'un film pulvérent est fixé en surface de ladite couche.

19. Granules selon la revendication 18, caractérisés en ce que le film pulvérulent est à base de lignine.

## Claims

1. A process for the encapsulation of solid materials to produce a granular material which contains at least one solid core and an adhering coating, characterized by the fact that
   a) a liquid encapsulating product is produced by means of acidulating a mixture of hemicelluloses and lignin from fiber materials,
   b) the encapsulated product is brought in contact with the product to be encapsulated so that a good mixing of both elements is achieved;
   c) a dry powder is added to the so combined elementss, in order to achieve a surface drying and to produce the granular material desired.

2. An encapsulation process in accordance with claim 1 so characterized that in a) the encapsulating product is produced from the hemicellulose fraction of aqueous extracts from fibrous plant material, whereby this fraction contains lignin.

3. An encapsulation process in accordance with claim 2 by which the encapsulation product is produced by the method mentioned under a) by concentrating the hemicellulose fraction of the aqueous extracts to a concentration of 0.4 - 0.8 grams OD per gram of liquid encapsulating material.

4. An encapsulation process in accordance with claims 1 through 3 by which the encapsulation product is acidulated according to a) using citric acid in amounts of 0.004 to 0.03 grams per gram dry substance.

5. An encapsulation process in accordance with claims 1 through 4 by which a surfactant is added to the encapsulating product during step a)

6. An encapsulation process in accordance with claims 1 through 5 by which during step a) an anti-freeze or a pesticide is added to the encapsulating product.

7. An encapsulating process in accordance with the above mentioned claims by which
   a) the encapsulationg product is produced by heating of the acidulated hemicel-lulose fraction to an elevated temperature,
   b) contact occurs between the product and the solid material at an elevated temperature.

8. An encapsulating process in accordance with claim 7 by which the encapsulated product is produced during step a) by heating the acidulated mixture of hemicelluloses and lignin to a temperature of 50 - 80 °C until a homogeneous mixture of low viscosity is obtained.

9. An encapsulating process in accordance with one of the previous claims by which in step b) the process of contact between the solid material and the encapsulating material is such that the aforementioned encapsulation product is poured onto the solid material, and the weight fraction of the encapsulation product is in the range 1 - 10 %, relative to the solid material; and then the materials are mixed together.

10. An encapsulation process in accordance with one of the previous claims by which in step c) a dry powder is added which essentially consists of lignin.

11. An encapsulating process in accordance with claims 7 and 10 by which in step c) the lignin powder is added to the elements while the latter is cooling down.

12. An encapsulting process in accordance with claims 10 or 11 by which in step c) the lignin powder is added to the mixed elements until individual grains have been singled out and then the excess powder is recovered.

13. An encapsulating process in accordance with claims 10 through 12 by which in step c) a lignin powder is used which has a particle size of less than 200 microns.

14. An encapsulation process in accordance with claims 1 through 13 by which the solid material which is to be encapsulated, consists of seed grains.

15. An encapsulating process in accordance with claim 14 by which in step a) the encapsulating product contains at least one of the following additives: a pesticide, a growth promoter.

16. An encapsulating process in accordance with claim 14

by which in step c) a dyed powder is added to the mixed elements.

17. An encapsulating process in accordance with claims 1 through 13 by which a granular materials are obtained which are to be ingested orally and whose core consists either a pharmaceutical substance, a veterinary pharmaceutical substance or a food stuff.

18. Granual materials which contain at least a solid materials core, in particular a seed grain or a pesticide or a pharmaceutical substance, a veterinary pharmaceutical material or a food stuff, whose adhering coating is characterized by consisting of solidified hemicelluloses and lignins and that a powdery film adheres to the surface of said encapsulation.

19. A granular material in accordance with claim 18 in which the powdery film consists of lignin.